# EUROPÄISCHE PATENTANMELDUNG

(11) **EP 3 627 199 A1**
(43) Veröffentlichungstag der Anmeldung: **25.03.2020**
(21) Anmeldenummer: 19199363.3
(22) Anmeldetag: 24.09.2019
(51) Int. Cl.: G02B 6/38

(54) **DUPLEX-ADAPTER**

(30) Priorität: 24.09.2018 DE 102018123415
(71) Anmelder: Dätwyler Cabling Solutions AG, 6460 Altdorf (CH)
(72) Erfinder: Albisser, Pius, 6376 Emmetten NW (CH)
(74) Vertreter: Samson & Partner Patentanwälte mbB

(57) **Zusammenfassung**

Die Erfindung betrifft einen verschließbaren Duplex-Adapter (300) umfassend: ein verschließbares Gehäuse (310) welches mit einem Bodenteil (320) verbunden oder verbindbar ist weiterhin umfassend mindestens einen Aufnahmebereich (305) der zur Aufnahme eines Duplex-Lichtwellenleitersteckers (306) eingerichtet ist, wobei jeder Aufnahmebereich (305) mittig durch einen Trennsteg (360) in einen rechten und linken Sektor unterteilt wird. In jedem Aufnahmebereich (305) ist eine erste und eine zweite Verschlusstür (350, 351), schwenkbar so im Gehäuse angeordnet, dass diese bei Einführung eines Duplex-Lichtwellenleitersteckers (306) seitlich nach innen geschwenkt werden. Weiterhin umfasst der Duplex-Adapter (300 für jede Verschlusstür (350, 351) jeweils ein Rückführmittel (370), welches dafür ausgelegt ist, die jeweilige Verschlusstür (350, 351) von einer Seitenwand (311) des Aufnahmebereichs (305) in Richtung des Trennstegs (360) zu drücken und somit die Sektoren des Aufnahmebereichs (305) zu verschließen, sowie jeweils eine Vertiefung (355, 356) auf den Außenseiten der Verschlusstüren (350, 351).

## Beschreibung

Die Erfindung betrifft verschließbare Duplex-Adapter für Lichtwellenleiterstecker umfassend ein verschließbares Gehäuse und einen Aufnahmebereich, welcher zur Aufnahme eines Duplex-Lichtwellenleitersteckers eingerichtet ist. Der Adapter weist in jedem Aufnahmebereich eine erste und eine zweite Verschlusstür zum Verschließen des Aufnahmebereichs auf. Des Weitern weisen die Außenseiten der Verschlusstüren jeweils eine Vertiefung auf.

Lichtwellenleiter sind in Datenverarbeitungsanlagen wie Rechenzentren weit verbreitet. Hierbei werden verschiedene Lichtwellenleiter üblicherweise über Adapter verbunden. Diese Adapter weisen einen ersten Aufnahmebereich zur Aufnahme des Ende eines ersten Lichtwellenleiters, üblicherweise in Form eines Lichtwellenleitersteckers, auf der Vorderseite ihres Gehäuses, sowie einen zweiten, gegenüberliegenden Aufnahmebereich zur Aufnahme eines zweiten Lichtwellenleiters auf. Durch Einführen der Enden der beiden Lichtwellenleiter in den Adapter werden diese Enden axial gleichgerichtet, so dass eine Übertragung von Licht von einem Lichtwellenleiten in den anderen Lichtwellenleiter ermöglicht wird. Üblicherweise werden Lichtwellenleiter mit zwei Kanälen, sogenannte Duplex-Lichtwellenleiter verwendet.

Ein Problem dieser Adapter ist es, den Eintritt von Staub und Schmutz in den Aufnahmebereich zu verhindern. Weiterhin soll der Austritt von Licht aus dem Adapter verhindert werden, wenn ein Lichtwellenleiter auf einer Seite des Adapters entnommen wird.

Um diese Probleme zu lösen sind im Stand er Technik verschließbare Adapter für Lichtwellenleiterstecker mit einem verschließbaren Gehäuse bekannt, welche Verschlusstüren aufweisen, die schwenkbar so im Gehäuse angeordnet sind, dass diese beim Einführung eines Duplex-Lichtwellenleitersteckers durch diesen aufgedrückt werden und nach innen geschwenkt werden. Bei der Entnahme des Lichtwellenleitersteckers wird das Gehäuse automatisch wieder verschlossen.

Die WO 2014/057265 offenbart einen Duplex-Adapter aufweisend Verschlusstüren, welche bei Einführung des Lichtwellenleitersteckers in vertikaler Richtung nach oben oder nach unten schwenken. Die Verwendung von Verschlusstüren welche in vertikaler Richtung schwenken ist jedoch nachteilig, da dies konstruktionsbedingt die Höhe des Adapters vergrößert. Die Verschlusstüren weisen eine Vertiefung auf, welche einen Kontakt der Ferrule mit der Verschlusstür beim Einführen des Lichtwellenleitersteckers in den Aufnahmebereich verhindern soll. Die Verschlusstüren sind ansonsten eben ausgeführt. Da der Lichtwellenleiterstecker beim Einführen in den Aufnahmebereich und Aufdrücken der Verschlusstüren über deren Oberfläche gleitet, kann jedoch Staub, welcher sich auf der Außenseite der Verschlusstüren befindet, in das Innere des Aufnahmebereichs geschoben werden. Verschmutzungen, wie Staub, im Inneren des Adapters können jedoch die Lichtleitung stören und somit die Funktion des Adapters beeinträchtigen. Eine Arretierung des Lichtwellenleitersteckers in dem Adapter wird nicht offenbart.

Die EP 2 766 877 B1 offenbart ebenfalls einen Duplex-Adapter aufweisend Verschlusstüren. Die Verschlusstüren werden hierbei in horizontaler Richtung aufeinander zu in Richtung eines Trennsteges zwischen zwei Sektoren des Aufnahmebereichs geschwenkt. Der Verschlussmechanismus ist in der Form eines Unterbaugruppenrahmens ausgeführt. Bei Entnahme des Steckers aus dem Aufnahmebereich wird mittels einer zentralen Feder für beide Türen das Verschließen des Aufnahmebereichs bewirkt. Diese Konstruktion hat den Nachteil, dass bei einem Schaden an nur einem Federelement der Schließmechanismus für zwei Verschlusstüren außer Funktion gesetzt wird. Wie in der WO 2014/057265 sind die Verschlusstüren bis auf eine Vertiefung eben ausgeführt. Eine Arretierung des Lichtwellenleitersteckers in dem Adapter wird ebenfalls nicht offenbart.

Der Erfindung lag die Aufgabe zugrunde, die Nachteile des Stands der Technik zu verringern oder zu beseitigen.

Im Speziellen ist es Aufgabe der Erfindung, einen Duplex-Adapter zu schaffen, welcher die Nachteile des Stands der Technik überwindet. Im Speziellen soll ein Duplex-Adapter mit geringer Bauhöhe zur Verfügung gestellt werden, bei dem Schutz und Staubeintrag minimiert werden. Weiterhin sollte der Lichtwellenleiterstecker sicher im Aufnahmebereich arretiert werden können.

Diese Aufgabe wird von den anspruchsgemäßen Duplex-Adaptern gelöst.

In einem ersten Aspekt betrifft die Erfindung einen Duplex-Adapter, umfassend ein verschließbares Gehäuse, welches mit einem Bodenteil verbunden oder verbindbar ist, sowie mindestens einen Aufnahmebereich, der zur Aufnahme eines Duplex-Lichtwellenleitersteckers eingerichtet ist, wobei jeder Aufnahmebereich mittig durch einen Trennsteg in einen rechten und linken Sektor unterteilt wird. Weiterhin weist der Adapter in jedem Aufnahmebereich eine erste und eine zweite Verschlusstür auf, welche schwenkbar so im Gehäuse angeordnet sind, dass diese bei Einführung eines Duplex-Lichtwellenleitersteckers seitlich nach innen geschwenkt werden, sowie für jede Verschlusstür jeweils ein Rückführmittel, welches dafür ausgelegt ist, die jeweilige Verschlusstür von einer Seitenwand des Aufnahmebereichs in Richtung des Trennstegs zu drücken und somit die Sektoren des Aufnahmebereichs zu verschließen. Des Weitern weisen die Außenseiten der Verschlusstüren jeweils eine Vertiefung auf.

Durch die seitliche bzw. horizontale Schwenkrichtung der Verschlusstüren im Gegensatz zu Verschlusstüren, welche in vertikaler Richtung schwenken, wird vorteilhafterweise eine flacherer Bauform mit einer geringeren vertikalen Ausdehnung ermöglicht. Die Verschlusstüren schwenken in Richtung der Seitenwände des Aufnahmebereichs. Im Rahmen der der Erfindung ist die horizontale Ebene die Ebene, in die Endstücke der Lichtwellenleiter, üblicherweise in Form von Ferrulen liegen.

In einer bevorzugten Ausführungsform ist das Gehäuse einstückig ausgeführt. In einer weiteren Ausführungsform ist das Gehäuse mit dem Bodenteil verbunden. Diese Verbindung kann stoffschlüssig sein und beispielsweise mittels Ultraschallverschweißung gebildet werden.

In einer besonders bevorzugten Ausführungsform der Erfindung weisen die Verschlusstüren auf deren Außenseiten jeweils mindestens ein Abstandelement auf. Die Außenseiten der Verschlusstüren sind bei geschlossenen Türen in Richtung außerhalb des Aufnahmebereichs gerichtet.

Die Abstandelemente sind vorzugsweise so angeordnet und dimensioniert, dass der Duplex-Lichtwellenleiterstecker bei Einführung in den Aufnahmebereich die Verschlusstüren zuerst an den Abstandelementen berühren. Zusätzlich oder Alternativ können alternativ die Abstandelemente so angeordnet und dimensioniert sein, dass die Verschlusstüren bei einem vollständig eingeführten Duplex-Lichtwellenleiterstecker bis zu ihrem Anschlag an den Seitenwänden geöffnet sind.

In einer bevorzugten Ausführungsform sind die Abstandselemente als Erhebungen, insbesondere längliche Erhebungen, wie beispielsweise Rippen ausgebildet. Bevorzugt erstrecken sich diese länglichen Erhebungen auf den Außenseiten der Verschlusstüren in geöffnetem Zustand in einer zur Einschubrichtung der Stecker im Wesentlichen parallelen Richtung.

Die Abstandselemente gemäß der vorliegenden Erfindung bewirken, dass der Duplex-Lichtwellenleiterstecker beim Einführen in den Aufnahmebereich die Verschlusstüren lediglich über die Abstandselemente und nicht über die gesamte Fläche der Verschlusstüren gleitet. Vorteilhafterweise kann aufgrund der verringerten Kontaktfläche zwischen Stecker und Verschlusstür somit weniger Staub von der Außenseiten der Verschlusstüren in das Innere des Adapters befördert werden. Der Vorteil einer geringeren Kontaktfläche wird weiter in einer Ausführungsform verstärkt, bei der die Abstandselemente einen dreieckigen Querschnitt aufweisen.

Das Ende eines Lichtwellenleiters innerhalb des Steckers wird allgemein durch die Ferrulen gebildet, an welchen das Licht aus dem Leiter austritt. In einer weitern bevorzugten Ausführungsform sind die Vertiefungen und Abstandelemente auf der Außenseite der Verschlusstüren so ausgebildet, dass bei Einführung des Steckers in den Aufnahmebereich die Ferrulen des Duplex-Lichtwellenleiterstecker die Verschlusstüren nicht berühren. In einer besonders bevorzugten Ausführungsform sind die Vertiefungen und Abstandelemente so ausgebildet, dass zwischen den Ferrulen und den Verschlusstüren ein Sicherheitsabstand gebildet wird. Somit kann vorteilhafterweise eine Beschädigung und Verschmutzung der Ferrulen beim Einführen des Steckers und eine Beeinträchtigung der Lichtübertragung vermindert werden.

Lichtwellenleiterstecker weisen im Allgemeinen in Einschubrichtung zwei längliche Rastelemente auf, welche an ihrem Ende jeweils zwei entgegengesetzt angeordnete Fortsätze aufweisen.

In einer weiteren besonders bevorzugten Ausführungsform der Erfindung weisen die Verschlusstüren auf den Außenseiten jeweils mindestens ein Arretierungselement auf. Die Arretierungselemente sind bevorzugt als Vorsprünge auf den Außenseiten der Verschlusstüren ausgestaltet. Insbesondere sind die Arretierungselemente so angeordnet, dass mindestens ein Rastelement eines vollständig in den Aufnahmebereich eingeführten Duplex-Lichtwellenleiterstecker hinter den Arretierungselementen einrasten kann und der Stecker in dem Aufnahmebereich arretiert wird. Im Speziellen werden beim Einrasten die oben genannten Fortsätze der Rastelemente so hinter den Arretierungselementen positioniert, dass eine rückwärtige Bewegung des Steckers aus dem Aufnahmebereich verhindert wird.

Bevorzugt sind die Arretierungselemente weiterhin so angeordnet, dass durch Translokation mindestens eines Teilbereichs des Rastelements des Duplex-Lichtwellenleiterstecker eine Arretierung gelöst werden kann. Die genannte Translokation kann üblicherweise durch ein entsprechend ausgebildetes Bedienelement am Stecker ausgelöst werden.

Die Arretierungselemente bewirken somit vorteilhafterweise eine Fixierung des Lichtwellenleiterstecker an den Verschlusstüren des Adapters. Diese Fixierung kann im Bedarfsfall mittels des beschriebenen Mechanismus einfach gelöst werden.

In einer weiteren Ausführungsform umfasst jeder Aufnahmebereich ebenfalls mindestens ein weiteres Arretierungselement, welches durch das Gehäuse so ausgebildet wird, das ein Rastelement des Duplex-Lichtwellenleiterstecker hinter diesem Arretierungselement einrasten kann und der Stecker in dem Aufnahmebereich arretiert wird. Somit wird vorteilhafterweise der Stecker zusätzlich durch das Gehäuse selbst fixiert. Bevorzugt weist jeder der beiden Sektoren des Aufnahmebereichs jeweils ein durch das Gehäuse ausgebildete Arretierungselement auf.

Üblicherweise weisen Duplex-Lichtwellenleiterstecker je ein Rastelement für jeden der beiden Sektoren des Aufnahmebereichs auf. Somit werden in der letztgenannte Ausführungsform je Aufnahmebereich insgesamt vier Arretierungselement ausgebildet, so dass eine sichere Fixierung des Steckers auch gewährleistet wird, wenn ein Rastelement an einem Arretierungselement nicht einrastet.

In einer bevorzugten Ausführungsform werden bei Einführung eines Duplex-Lichtwellenleitersteckers in den Adapter die beiden Verschlusstüren in Richtung voneinander weg geschwenkt. In einer weiteren Ausführungsform der Erfindung können die beiden Verschlusstüren unabhängig voneinander geschwenkt werden. Die Verschlusstüren können beispielsweise durch Bohrungen im Adaptergehäuse und Bohrungen im Bodenteil gehalten werden, in die von den Verschlusstüren umfasste Stifte eingeführt sind. In einer spezifischen Ausführungsform liegen die Verschlusstüren nicht innerhalb eines Verschluss-Unterbaugruppenrahmens vor.

Das Rückführmittel im Sinne der vorliegenden Erfindung ist dafür ausgelegt, die Verschlusstüren von einer Seitenwand des Aufnahmebereichs in Richtung des Trennstegs zu drücken und somit die Sektoren des Aufnahmebereichs zu verschließen. Als Rückführmittel, wird bevorzugt eine Feder, besonders bevorzugt eine Flachfedern verwendet. Die Feder kann jeweils durch eine Aussparung in einer Verschlusstür geführt werden. Dabei liegt ein Federarm an der Adapterseitenwand und der andere Federarm an der Innenseite der Verschlusstüre an.

Die Feder ist ausgelegt, um eine nach außen gerichtete Kraft aufzubringen.

Der erfindungsgemäße Adapter umfasst bevorzugt mehrere, beispielsweise 2, 3, 4, 5, bevorzugt 6, oder mehr als 6 nebeneinander angeordnete Aufnahmebereiche. Der Adapter kann somit ein Adapterpanel sein.

Der Duplex-Lichtwellenleiterstecker kann bevorzugt ein LC-Duplexstecker (LC = Lucent connector) sein. Die Spezifikation des LC-Duplex-Steckers ist im Standard IEC 61754-20 standardisiert. In einer bevorzugten Ausführungsform liegt das von erfindungsgemäßen Adapter umfasste verschließbare Gehäuse in Form eines Standardgehäuses vor.

In einer weiteren Ausführungsform kann der oben genannte Trennsteg jedes Aufnahmebereichs eine Zentrierhülsenhalterung aufweisen. Die Zentrierhülsenhalterung kann im Gehäuse enthalten sein. Der Trennsteg kann durch das Einschieben in eine Nut im einteiligen Gehäuse und eine Nut im Bodenteil positioniert werden.

Weiterhin kann das verschließbares Gehäuse und der Trennsteg mit Zentrierhülsenhalterung je Sektor zwei Haltebohrungen aufweisen. Die Haltebohrungen des verschließbaren Gehäuses sind bevorzugt mit den Haltebohrungen des Trennstegs mit Zentrierhülsenhalterung ausgerichtet.

Ausführungsformen der Erfindung werden nun anhand der beigefügten Figuren näher erläutert.
Figur 1 zeigt eine schematische perspektivische Explosionsansicht eines erfindungsgemäßen Duplex-Adapters mit sechs Aufnahmebereichen und zwei unterschiedlich weit in den die Aufnahmebereiche eingeführten Duplex-Lichtwellenleitersteckern.
Figur 2 zeigt eine schematische perspektivische auseinander gezogene Teilansicht der Aufnahmebereiche mit den Verschlusstüren und den Rückführelementen eines erfindungsgemäßen Duplex-Adapters.
Figur 3 zeigt eine schematische perspektivische Ansicht eines erfindungsgemäßen Duplex-Adapters mit sechs Aufnahmebereichen und drei unterschiedlich weit in die Aufnahmebereiche eingeführten Duplex-Lichtwellenleitersteckern.
Figur 4 zeigt eine schematische perspektivische Vergrößerung des Bereichs A der Figur 3.
Figur 5 zeigt eine schematische perspektivische Vergrößerung des Bereichs B der Figur 4.
Figur 6 zeigt eine schematische Aufsicht auf einen erfindungsgemäßen Duplex-Adapters mit sechs Aufnahmebereichen und drei unterschiedlich weit in die Aufnahmebereiche eingeführten Duplex-Lichtwellenleitersteckern.
Figur 7 zeigt eine Vergrößerung des Bereichs C der Figur 6.
Figur 8 zeigt aufgeschnittene Längsschnitte eines erfindungsgemäßen Duplex-Adapters entlang der Schnittebenen E-E (Fig. 8 A), D-D (Fig. 8 B) und C-C (Fig. 8 C) der Fig. 6.

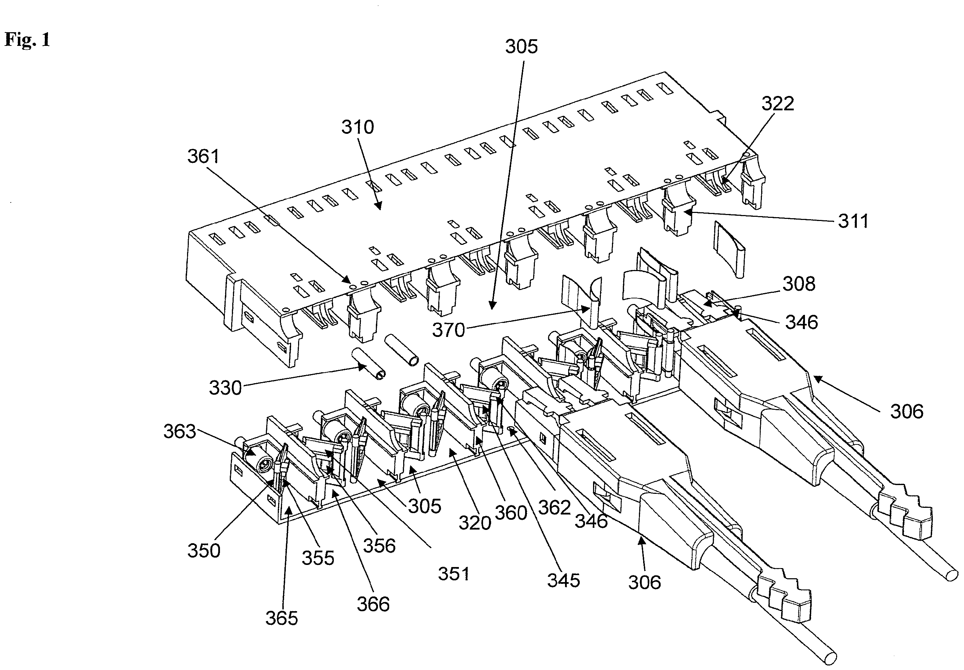

Figur 1 zeigt einen erfindungsgemäßen verschließbaren Duplex-Adapter 300 umfassend ein verschließbares Gehäuse 310, welches mit einem Bodenteil 320 verbindbar ist, sowie sechs Aufnahmebereiche 305 die zur Aufnahme eines Duplex-Lichtwellenleitersteckers 306 eingerichtet ist. Jeder Aufnahmebereich wird mittig durch einen Trennsteg 360 in einen rechten 366 und linken Sektor 365 unterteilt. In dem Adapter der Figur 1 ist der rechte Lichtwellenleiterstecker vollständig und der linke Lichtwellenleiterstecker teilweise eingeführt. Weiterhin weist der Adapter in jedem Aufnahmebereich 305 eine erste und eine zweite Verschlusstür 350, 351 auf, welche schwenkbar so im Gehäuse 310 angeordnet sind, dass diese bei Einführung eines Duplex-Lichtwellenleitersteckers 306 seitlich nach innen geschwenkt werden, sowie für jede Verschlusstür 350, 351 jeweils ein Rückführmittel 370, welches dafür ausgelegt ist, die jeweilige Verschlusstür von einer Seitenwand 311 des Aufnahmebereichs 305 in Richtung des Trennstegs 360 zu drücken und somit die Sektoren 365, 366 des Aufnahmebereichs 305 zu verschließen. Des Weitern weisen die Außenseiten der Verschlusstüren jeweils eine Vertiefung 355, 356 auf. Diese sind so ausgebildet, dass bei Einführung des Steckers 306 in den Aufnahmebereich die Ferrulen des Duplex-Lichtwellenleiterstecker 306 die Verschlusstüren 350, 351 nicht berühren. Die Verschlusstüren 350, 351 weisen weiterhin Arretierungselemente 346 auf. Die Arretierungselemente 346 sind als Vorsprünge auf den Außenseiten der Verschlusstüren 350, 351 ausgestaltet. Die Arretierungselemente 346 sind so angeordnet, dass mindestens ein Rastelement 308 eines vollständig in den Aufnahmebereich 305 eingeführten Duplex-Lichtwellenleiterstecker 306 hinter den Arretierungselementen 346 einrasten kann und der Stecker 306 in dem Aufnahmebereich 305 arretiert wird. Beim Einrasten werden Fortsätze der Rastelemente 308 hinter den Arretierungselementen 346 positioniert, so dass eine rückwärtige Bewegung des Steckers 306 aus dem Aufnahmebereich 305 verhindert wird.

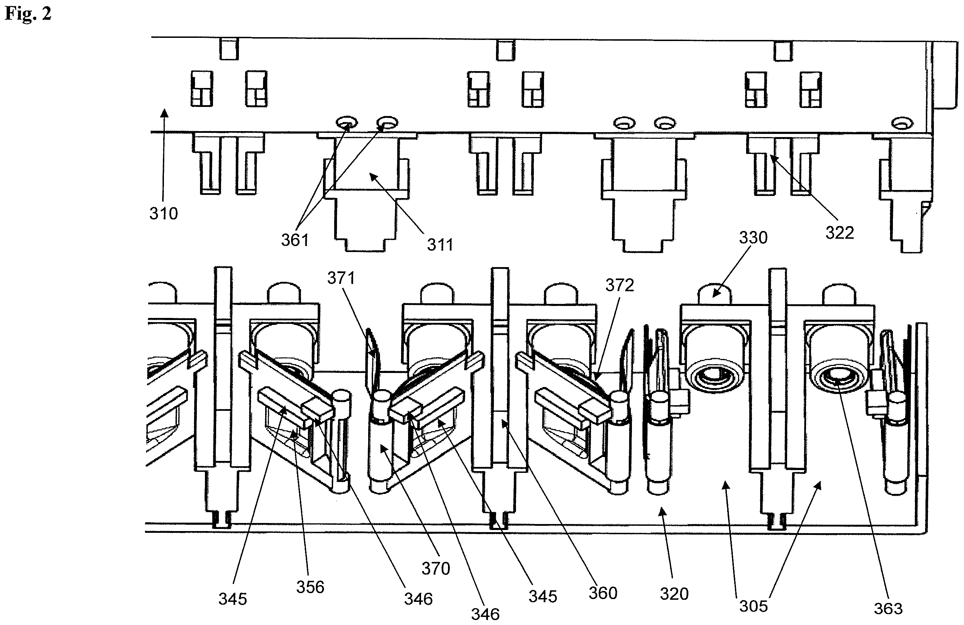

Figur 2 zeigt eine schematische perspektivische auseinandergezogene Teilansicht der Aufnahmebereiche 305 des erfindungsgemäßen Duplex-Adapters 300. Die spezifische Ausführung der Verschlusstüren 350, 351 und der Rückführelementen 370 ist sichtbar. Die Verschlusstüren 350, 351 weisen auf den Außenseiten jeweils ein Abstandelement 345 auf. Die Außenseiten der Verschlusstüren 350, 351 sind bei geschlossenen Türen in Richtung entgegengesetzt des Inneren des Aufnahmebereichs 305 gerichtet. Die Abstandelemente 345 sind so angeordnet und dimensioniert, dass der Duplex-Lichtwellenleiterstecker 306 bei Einführung in den Aufnahmebereich 305 die Verschlusstüren 350, 351 zuerst an den Abstandelementen 345 berührt. In der in Figur 2 gezeigten Ausführungsform sind die Abstandelemente 345 als längliche Erhebungen in Form von Rippen ausgebildet. Die Rippen erstrecken sich auf den Außenseiten der Verschlusstüren 350, 351 in geöffnetem Zustand in einer zur Einschubrichtung der Stecker 308 im Wesentlichen parallelen Richtung. Die Verschlusstüren 350, 351 weisen weiterhin Arretierungselemente 346 auf. Die Arretierungselemente 346 sind als Vorsprünge auf den Außenseiten der Verschlusstüren 350, 351 ausgestaltet. Die Arretierungselemente sind so angeordnet, dass mindestens ein Rastelement eines vollständig in den Aufnahmebereich 305 eingeführten Duplex-Lichtwellenleiterstecker hinter den Arretierungselementen einrasten kann und der Stecker in dem Aufnahmebereich arretiert wird. Im Speziellen werden beim Einrasten die oben genannten Fortsätze der Rastelemente 308 hinter den Arretierungselementen positioniert, so dass eine rückwärtige Bewegung des Steckers aus dem Aufnahmebereich verhindert wird.

Die Rückführmittel 370 sind in der dargestellten Ausführungsform in Form von Flachfedern ausgeführt, welche geeignet sind die Verschlusstüren 350, 351 von einer Seitenwand 311 des Aufnahmebereichs 305 in Richtung des Trennstegs 360 zu drücken und somit die Sektoren 365, 366 des Aufnahmebereichs zu verschließen. Die Federn 370 sind jeweils durch eine Aussparung in den Verschlusstüren 350, 351 geführt. Dabei liegt ein Federarm 371 an der Adapterseitenwand 311 und der andere Federarm 372 an der Innenseite der Verschlusstüre 350, 351 an. Die Federn 370 bringen eine nach außen gerichtete Kraft auf.

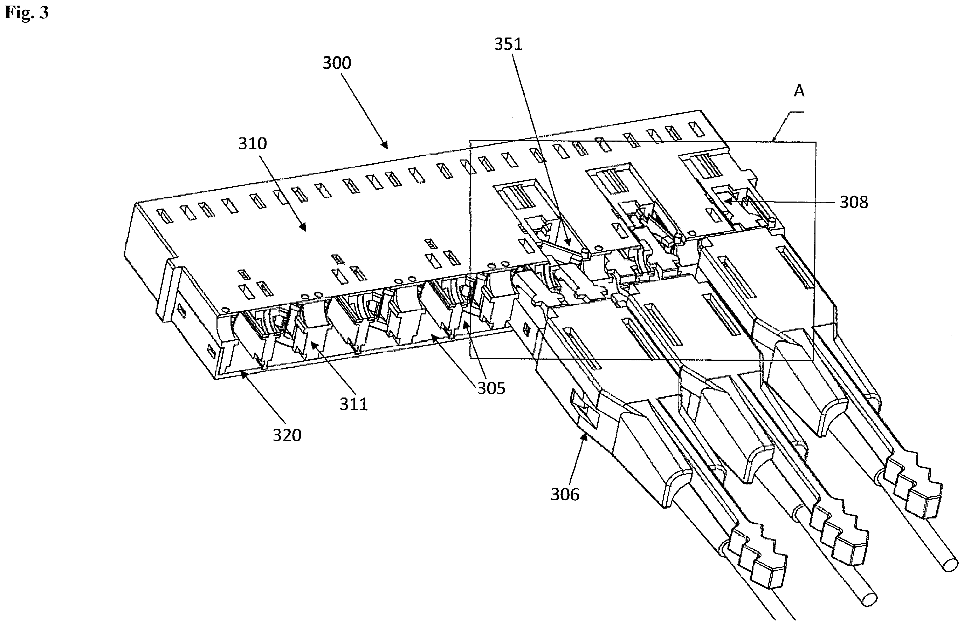

Figur 3 zeigt eine schematische perspektivische Ansicht eines erfindungsgemäßen Duplex-Adapters 300 mit sechs Aufnahmebereichen 305 und drei unterschiedlich weit in die Aufnahmebereiche 305 eingeführten Duplex-Lichtwellenleitersteckern 306.

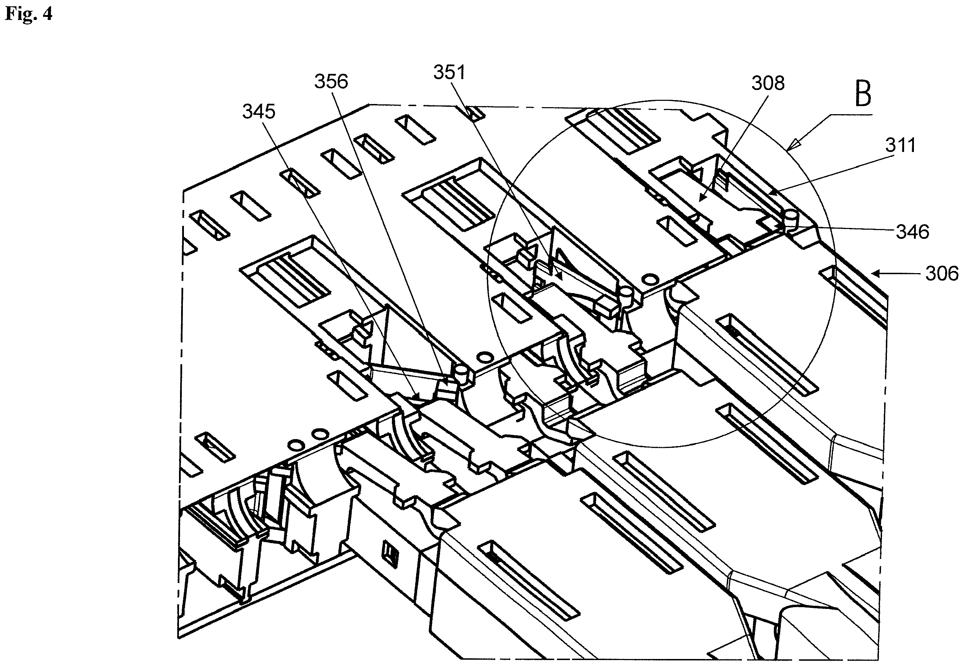

In der vergrößerten Teilansicht des Bereichs A der Figur 3 wird in Figur 4 durch die im Bereich der Aufnahmebereiche 305 aufgeschnittene Gehäusedecke der Mechanismus der Einführung der Duplex-Lichtwellenleiterstecker 306 deutlich. Der in der Figur linke Stecker ist nur wenig in den Aufnahmebereichen 305 eingeführt. Der in der Figur rechte Stecker ist vollständig in den Aufnahmebereichen 305 eingeführt. Beim Einführen berühren die Stecker die Verschlusstüren 350, 351 zuerst an deren Abstandselement 345 und drücken die Verschlusstüren 350, 351 beim weiteren Einführen in einer horizontalen Bewegung seitlich in Richtung einer Seitenwand 311.

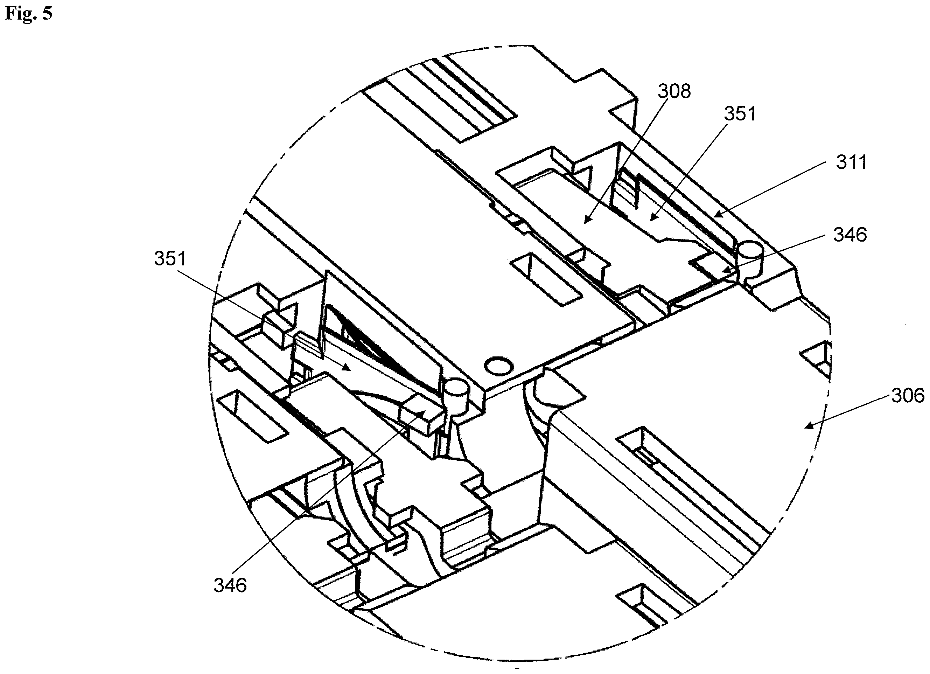

In der vergrößerten Teilansicht des Bereichs B der Figur 4 wird in Figur 5 insbesondere die Anordnung der Merkmale bei dem vollständig in den Aufnahmebereichen 305 eingeführten rechten Stecker 306 verdeutlicht. Die Verschlusstüren 351, 352 sind bis zum Anschlag an einer Seitenwand 311 geöffnet. In dieser Stellung rastet ein Rastelement 308 des Steckers 306 hinter einem auf einer Verschlusstür 351 angeordneten Arretierungselement 346 ein und arretiert den Stecker 306 im Adapter. Beim Einrasten werden Fortsätze der Rastelemente 308 hinter den Arretierungselementen positioniert, so dass eine rückwärtige Bewegung des Steckers aus dem Aufnahmebereich verhindert wird.

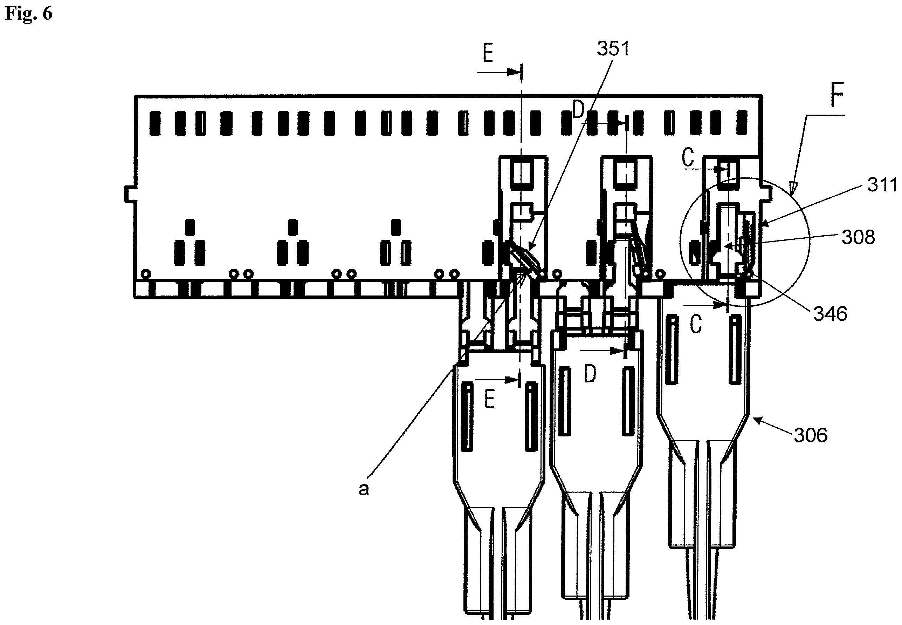

Figur 6 zeigt eine schematische Aufsicht des in den Figuren 3 bis 5 dargestellten erfindungsgemäßen Duplex-Adapters mit sechs Aufnahmebereichen und drei unterschiedlich weit in die Aufnahmebereiche eingeführte Duplex-Lichtwellenleitersteckern 306. In der Aufsicht ist das seitliche Schwenken der Verschlusstür 351 in Richtung der Seitenwand 311 gut erkennbar. Die erste Berührung des Steckers 306 mit der Verschlusstür 351 findet am Punkt (a) statt.

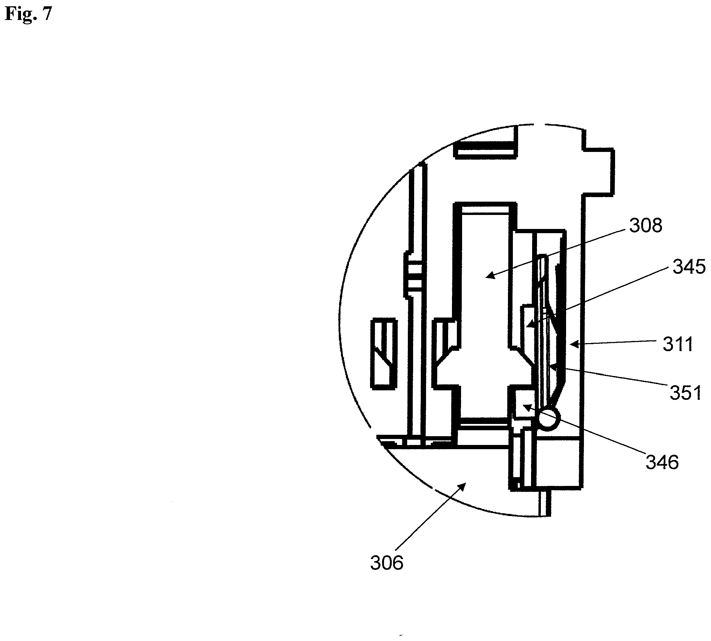

Figur 7 zeigt eine Vergrößerung des Bereichs C der Figur 6. Der Stecker 308 ist vollständig in den Adapter eingeführt. Die Verschlusstür 351 ist bis zum Anschlag an der Seitenwand 311 geöffnet. In dieser Stellung rastet ein Rastelement 308 des Steckers 306 hinter einem auf einer Verschlusstür 351 angeordneten Arretierungselement 346 ein und arretiert den Stecker 306 im Adapter.

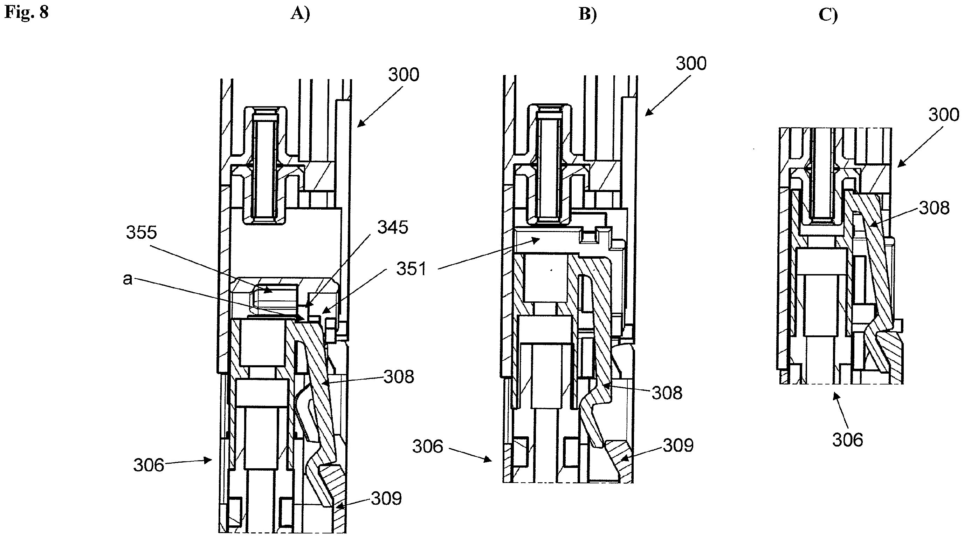

Figur 8 zeigt aufgeschnittene Längsschnitte eines erfindungsgemäßen Duplex-Adapters entlang der Schnittebenen A-A (Fig. 8 A), B-B (Fig. 8 B) und C-C (Fig. 8 C) der Figur 6. Figur 8 A) verdeutlicht, dass die erste Berührung des Steckers 306 mit der Verschlusstür 351 am Punkt (a) lediglich auf der kleinen Fläche des rippenförmigen Abstandelements 345 und nicht über die gesamte Fläche der Verschlusstür 351 stattfindet. Wie im Vorhergehenden erläutert, bewirkt die geringflächige Berührung, dass an dieser Stelle lediglich Staub von der kleinen Rippenfläche aufgenommen wird. Im Vergleich zu Figur 8 A) wird in Figur 8 B) das Rastelement 308 mittels dem Bedienelement 309 herabgedrückt, so dass das Rastelement beim Einführen leichter an dem Arretierungselement 346 vorbeigeführt werden kann. Das Einführen des Steckers 306 wird entsprechend erleichtert. Figur 8 C) zeigt die formschlüssige Verbindung von des Duplex Adapters 300 mit dem Duplex-Lichtwellenleiterstecker 306 mit eingerastetem Rastelement 308.

Obwohl lediglich eine beispielhafte Ausführungsform in der vorhergehenden Beschreibung gezeigt wurde, können verschiedenste Änderungen und Modifikationen daran vorgenommen werden. Die genannte Ausführungsform ist lediglich ein Beispiel und nicht dazu vorgesehen, den Gültigkeitsbereich, die Anwendbarkeit oder die Konfiguration des Duplex-Adapters in irgendeiner Weise zu beschränken.

### Bezugszeichenliste

300 Duplex-Adapter
305 Aufnahmebereich
306 Duplex-Lichtwellenleitersteckers
308 Rastelemente
309 Bedienelement
310 Gehäuse
311 Seitenwand
313, 363 Haltebohrungen
320 Bodenteil
345 Abstandelement
346 Arretierungselement
350, 351 Verschlusstür
355, 356 Vertiefung
360 Trennsteg
365 linker Sektor
366 rechter Sektor
370 Rückführmittel
a erster Berührungspunkt

## Patentansprüche

1. Verschließbarer Duplex-Adapter (300) umfassend:
- ein verschließbares Gehäuse (310) welches mit einem Bodenteil (320) verbunden oder verbindbar ist;
- mindestens einen Aufnahmebereich (305) der zur Aufnahme eines Duplex-Lichtwellenleitersteckers (306) eingerichtet ist, wobei jeder Aufnahmebereich (305) mittig durch einen Trennsteg (360) in einen rechten und linken Sektor unterteilt wird;
- in jedem Aufnahmebereich (305) eine erste und eine zweite Verschlusstür (350, 351), welche schwenkbar so im Gehäuse angeordnet sind, dass diese bei Einführung eines Duplex-Lichtwellenleitersteckers (306) seitlich nach innen geschwenkt werden;
- für jede Verschlusstür (350, 351) jeweils ein Rückführmittel (370), welches dafür ausgelegt ist, die jeweilige Verschlusstür (350, 351) von einer Seitenwand (311) des Aufnahmebereichs (305) in Richtung des Trennstegs (360) zu drücken und somit die Sektoren des Aufnahmebereichs (305) zu verschließen;
- jeweils eine Vertiefung (355, 356) auf den Außenseiten der Verschlusstüren (350, 351).

2. Duplex-Adapter gemäß Anspruch 1, wobei die Verschlusstüren (350, 351) auf den Außenseiten jeweils mindestens ein Abstandelement (345) aufweisen.

3. Duplex-Adapter gemäß einem der vorhergehenden Ansprüche, wobei die Verschlusstüren (350, 351) auf den Außenseiten jeweils mindestens ein Arretierungselement (346) aufweisen.

4. Duplex-Adapter gemäß einem der vorhergehenden Ansprüche, wobei die Arretierungselemente (346) so angeordnet sind, dass mindestens ein Rastelement eines vollständig in den Aufnahmebereich (305) eingeführten Duplex-Lichtwellenleiterstecker (306) hinter den Arretierungselementen (346) einrasten kann und der Stecker (306) in dem Aufnahmebereich (305) arretiert wird.

5. Duplex-Adapter gemäß einem der vorhergehenden Ansprüche, wobei die Arretierungselemente (346) so angeordnet sind, dass durch Translokation mindestens eines Teilbereichs des Rastelements des Duplex-Lichtwellenleiterstecker (306) die Arretierung gelöst werden kann.

6. Duplex-Adapter gemäß einem der vorhergehenden Ansprüche, wobei die Arretierungselemente (346) Vorsprünge auf den Außenseiten der Verschlusstüren (350, 351) sind.

7. Duplex-Adapter gemäß einem der vorhergehenden Ansprüche, wobei der Aufnahmebereich (305) ebenfalls mindestens ein weiteres Arretierungselement umfasst, welches durch das Gehäuse (310) so ausgebildet wird, das ein Rastelement des Duplex-Lichtwellenleiterstecker (306) hinter diesem Arretierungselement einrasten kann und der Stecker (306) in dem Aufnahmebereich (305) arretiert wird.

8. Duplex-Adapter gemäß einem der vorhergehenden Ansprüche, wobei die Abstandelemente (345) so angeordnet und dimensioniert sind, dass der Duplex-Lichtwellenleiterstecker (306) bei Einführung in den Aufnahmebereich (305) die Verschlusstüren (350, 351) zuerst an den Abstandelementen (345) berühren und/oder die Abstandelemente (345) so angeordnet und dimensioniert ist, dass die Verschlusstüren (350, 351) bei einem vollständig eingeführten Duplex-Lichtwellenleiterstecker (306) bis zum Anschlag geöffnet sind.

9. Duplex-Adapter gemäß einem der vorhergehenden Ansprüche, wobei die Abstandselemente (345) Erhebungen, insbesondere in Form von Rippen sind.

10. Duplex-Adapter gemäß einem der vorhergehenden Ansprüche, wobei die Abstandselemente (345) einen dreieckigen Querschnitt aufweisen.

11. Duplex-Adapter gemäß einem der vorhergehenden Ansprüche, wobei die Vertiefungen (355, 356) und die Abstandelemente (345) so ausgebildet sind, dass bei Einführung des Steckers (306) in den Aufnahmebereich (305) die Ferrulen des Duplex-Lichtwellenleiterstecker (306) die Verschlusstüren (350, 351) nicht berühren.

12. Duplex-Adapter gemäß einem der vorhergehenden Ansprüche, wobei bei Einführung eines Duplex-Lichtwellenleitersteckers (306) die beiden Verschlusstüren (350, 351) in Richtung voneinander weg geschwenkt werden.

13. Duplex-Adapter gemäß einem der vorhergehenden Ansprüche, wobei die erste und zweite Verschlusstür (350, 351) unabhängig voneinander geschwenkt werden können.

14. Duplex-Adapter gemäß einem der vorhergehenden Ansprüche, wobei der Adapter mehrere, bevorzugt 6, nebeneinander angeordnete Aufnahmebereiche (305) umfasst.

15. Duplex-Adapter gemäß einem der vorhergehenden Ansprüche, wobei der Duplex-Lichtwellenleiterstecker (306) ein LC-Duplexstecker ist.

16. Duplex-Adapter gemäß einem der vorhergehenden Ansprüche, wobei das Rückführmittel eine Feder (370), bevorzugt eine Flachfeder ist.

17. Duplex-Adapter gemäß Anspruch 16, wobei die Feder (370) durch eine Aussparung in der Verschlusstüre (350, 351) geführt wird, wobei ein Federarm (371) an der Adapterseitenwand (311) und der andere Federarm (372) an der Innenseite der Verschlusstüre (350, 351) anliegt und dafür ausgelegt ist, eine nach außen gerichtete Kraft aufzubringen.

18. Duplex-Adapter gemäß einem der vorhergehenden Ansprüche, wobei das verschließbare Gehäuse (310) ein Standardgehäuse ist.

19. Duplex-Adapter gemäß einem der vorhergehenden Ansprüche, wobei der Trennsteg (360) eine Zentrierhülsenhalterung aufweist

20. Duplex-Adapter gemäß einem der vorhergehenden Ansprüche, wobei das verschließbares Gehäuse (310) und der Trennsteg mit Zentrierhülsenhalterung (360) je Duplex-Port zwei Haltebohrungen (313, 363) aufweisen, wobei die Haltebohrungen des verschließbares Gehäuses (310) mit den Haltebohrungen des Trennstegs mit Zentrierhülsenhalterung (360) ausgerichtet sind.
